# EUROPÄISCHE PATENTSCHRIFT

(11) **EP 3 629 082 B1**
(45) Veröffentlichungstag und Bekanntmachung des Hinweises auf die Patenterteilung: **26.05.2021**
(21) Anmeldenummer: 19198857.5
(22) Anmeldetag: 23.09.2019
(51) Int. Cl.: G03B 15/06

(54) **AUFNAHMESYSTEM UND VERFAHREN ZUR OPTISCHEN ERFASSUNG ZUMINDEST EINES GESICHTS EINER PERSON**
RECORDING SYSTEM AND METHOD FOR OPTICALLY DETECTING AT LEAST ONE FACE OF A PERSON
SYSTÈME D'ENREGISTREMENT ET PROCÉDÉ DE DÉTECTION OPTIQUE D'AU MOINS UN VISAGE D'UNE PERSONNE

(30) Priorität: 25.09.2018 DE 102018123579
(43) Veröffentlichungstag der Anmeldung: 01.04.2020
(73) Patentinhaber: Bundesdruckerei GmbH, 10969 Berlin (DE)
(72) Erfinder: Thater, Marcel, 30952 Ronnenberg (DE); Rabeler, Uwe, 30453 Hannover (DE); Wolf, Andreas, 13158 Berlin (DE); Maggioni, Christoph, 10961 Berlin (DE); Herrmann, Klaus, 30625 Hannover (DE); Hesse, Holger, 30655 Hannover (DE)
(74) Vertreter: Hentrich Patentanwälte PartG mbB

(56) Entgegenhaltungen:
- CN-U- 203 502 718
- FR-A1- 3 047 091
- RU-C1- 2 351 971

## Beschreibung

Die Erfindung betrifft ein Aufnahmesystem zur optischen Erfassung zumindest eines Gesichts einer Person. Das Aufnahmesystem umfasst eine Kamera, die mit ihrer Optik auf eine einen Bildhintergrund für die Aufnahme bildende Rückwand gerichtet ist. Die Rückwand weist eine der Kamera zugewandte Vorderseite und eine von der Kamera abgewandte Rückseite auf. Zudem ist beim Aufnahmesystem eine Beleuchtungseinrichtung vorhanden, die ausgebildet ist, die Rückwand und/oder die Person zu beleuchten. Die Erfindung betrifft außerdem ein Verfahren zur optischen Erfassung zumindest eines Gesichts einer Person mit einem solchen System.

Ein Aufnahmesystem, bei dem sowohl die Rückwand als auch die Person selbst mittels einer Beleuchtungseinrichtung beleuchtet werden, um eine schattenfreie Ablichtung zumindest des Gesichts der Person zu erzeugen, ist aus der US 8,676,045 B1 bekannt. FR 3047091, RU2351971 und CN203502718 offenbaren Fotostudios zur Aufnahme von Passbildern. Die Person steht hierzu auf einem Podest, wobei die Rückwand zudem gebogen ausgeführt ist, um zu verhindern, dass irgendwelche Kanten oder Ecken in der Bildaufnahme sichtbar sind, so dass ein nahtlos gestalteter Bildhintergrund vorliegt. Um Reflexionen oder Bildfehler, ausgelöst durch die Umgebung des Systems, zu vermeiden, ist zusätzlich eine Abschirmung vorhanden.

Aufnahmesysteme können Einsatz finden bei sogenannten Enrolment- und Self-Enrolment-Systemen zur Aufnahme von Porträtfotos für Identitätsdokumente und für Reisenden-Datenbanken. Sie werden insbesondere in Behördengebäuden oder an Grenzkontrollstellen, beispielsweise an Flughäfen aufgestellt. Die Beleuchtungssituation am Aufstellungsort variiert, womit also unterschiedliche Lichtverhältnisse bei der optischen Erfassung vorliegen können. Trotz der variierenden Beleuchtungssituation sind die Porträtfotos an den Enrolment-Systemen entsprechend der Anforderungen der ISO/IEC 19794-5:2005 für Gesichtsbilder anzufertigen. Diese Norm erfordert eine, insbesondere schattenfreie, Ausleuchtung des Gesichts vor einem neutralen Hintergrund, der ebenfalls von Schatten freizuhalten ist. Eine spätere Freistellung des Gesichtsbilds mittels einer Software zur Bildbearbeitung ist nicht gestattet; wird also von der Norm untersagt.

An Grenzkontrollstellen, aber auch in Behörden steht oft sehr wenig Raum für die Einrichtung eines Aufnahmesystems zur Verfügung, wobei zudem gewährleistet sein sollte, dass Sicherheitspersonal aus Sicherheitsgründen zumindest zeitweise den gesamten Raum im Blick behalten kann. Eine stationäre nicht transparente Rückwand und eine stationäre Hintergrundbeleuchtung schränken die Aufstellungsmöglichkeit deutlich ein und machen diese im Fall der Grenzkontrolle teilweise gänzlich unmöglich. Hier ist es zwingend notwendig, dass die Beamten auch den Raum vor sich überblicken und potentielle Gefahren oder ein erhöhtes Passagieraufkommen erkennen können. Es besteht darüber hinaus das Problem, dass beispielsweise die bauliche Situation an Flughäfen es verhindert, dass die den Bildhintergrund für die Aufnahme bildende Rückwand an einer Wand des Gebäudes platziert werden kann.

Es ist daher die Aufgabe der vorliegenden Erfindung, ein Aufnahmesystem und ein Verfahren zur optischen Erfassung zumindest eines Gesichts einer Person bereitzustellen, die den vorstehend genannten Nachteilen Rechnung tragen.

Diese Aufgabe wird mit einem Aufnahmesystem gemäß dem Merkmalsbestand des Anspruches 1 und mit einem Verfahren gemäß dem Merkmalsbestand des Anspruches 11 gelöst. Vorteilhafte Ausgestaltungen mit zweckmäßigen Weiterbildungen der Erfindung sind in den abhängigen Ansprüchen angegeben. Das Aufnahmesystem zeichnet sich insbesondere dadurch aus, dass die Rückwand ausgebildet ist, umgeschaltet zu werden zwischen einer Opak-Konfiguration, in welcher ein zumindest aus einem vorgegebenen Spektralbereich stammendes, auf die Rückseite der Rückwand auftreffendes Licht absorbiert oder von der Rückseite reflektiert wird, und einer Transmission-Konfiguration, in welcher auf die Rückseite der Rückwand auftreffendes Licht zur Vorderseite der Rückwand transmittiert wird.

Damit besteht also die Möglichkeit, die den Bildhintergrund für die Aufnahme bildende Rückwand transparent zu schalten, so dass das Sicherheitspersonal in dieser Konfiguration sehen kann, was sich hinter der Rückwand befindet, womit sich diese Rückwand bzw. das Aufnahmesystem hervorragend an Grenzkontrollstellen bzw. an Enrolment- und Self-Enrolment-Systemen bspw. an Flughäfen einsetzen lässt.

Neben der Möglichkeit des Einsatzes eines thermochromen Materials für die Rückwand, das eine Lichtabsorption in Abhängigkeit von der Temperatur ändert, besteht zudem die Möglichkeit, dass die Rückwand elektrosensitiv zwischen der Opak-Konfiguration und der Transmission-Konfiguration, vorzugsweise auch auf dazwischenliegende Zwischenkonfigurationen, umgeschaltet werden kann.

In diesem Zusammenhang hat es sich daher als vorteilhaft erwiesen, wenn die Rückwand mit einer die Rückseite aufweisenden Rückplatte gebildet ist, die ein transparentes Substrat für eine auf einer der Rückseite abgewandten Seite der Rückplatte angebrachte elektrosensitive Folie bildet, um die Rückwand zwischen der Opak-Konfiguration und der Transmission-Konfiguration oder einer dazwischenliegenden Zwischenkonfiguration elektrisch umzuschalten. Dies bietet eine besonders einfache Möglichkeit zur Verstellung des Aufnahmesystems zwischen seinen einzelnen Konfigurationen. Hier besteht zudem die Möglichkeit, dass ein elektrisch schaltbares LC-Glas (engl. "liquid crystal") oder PDLC-Glas (engl. "polymer-dispersed liquid crystal") Einsatz findet.

Eine flexible Formgebung der Rückwand lässt sich insbesondere durch eine flexible, elektrisch schaltbare, d.h. elektrosensitive Folie realisieren, die aus einem Kunststoff, insbesondere einem Polyethylenterephtalat (PET), gebildet ist, in welchen eine Vielzahl von über die Folie verteilten Flüssigkristallen einlamiert ist, die ausgestaltet sind, ihre Ausrichtung beim Anlegen einer elektrischen Spannung zu verändern. Typischerweise ist das Anlegen der Spannung dazu genutzt, um die Rückwand in die Transmission-Konfiguration zu verstellen, so dass beim Abnehmen der Spannung die Opak-Konfiguration eingenommen wird. Das bedeutet, dass die Rückwand im spannungslosen Zustand also opak und damit undurchsichtig für das menschliche Auge ist.

In diesem Zusammenhang hat es sich zudem als vorteilhaft erwiesen, wenn die Rückwand mehrschichtig mit einem Polymer-Flüssigkristallfilm mit Flüssigkristallmolekülen gebildet ist, und wenn die im Flüssigkristallfilm angeordneten Flüssigkristallmoleküle ausgestaltet sind, beim Anlegen einer Gleichspannung ihre Ausrichtung zu ändern, um die Rückwand zwischen der Opak-Konfiguration und der Transmission-Konfiguration elektrisch umzuschalten. Die Flüssigkristallmoleküle bilden Streuzentren für sichtbares Licht, wobei auch hier die Möglichkeit besteht, dass beim Anlegen der Gleichspannung die Ausrichtung der Flüssigkristallmoleküle derart erfolgt, dass die Rückwand für das menschliche Auge transparent und damit durchsichtig erscheint.

Um zu verhindern, dass auf der Rückwand Schatten entstehen oder um einen schattenfreien Bildhintergrund für die Aufnahme zu gewährleisten, hat es sich als vorteilhaft erwiesen, wenn die Rückwand eine die Vorderseite der Rückwand aufweisende Frontplatte umfasst, die als ein Lichtleiter gebildet ist, derart, dass in die Frontplatte eingekoppeltes Licht über die Vorderseite der Rückwand auskoppelbar ist oder ausgekoppelt wird. Hinter der Frontplatte liegende Schichten der Rückwand können dabei als Reflektoren wirken, so dass gewährleistet ist, dass in die Frontplatte der Rückwand eingekoppeltes Licht überwiegend - über die Vorderseite, mithin in Richtung der Kamera ausgekoppelt wird.

In diesem Zusammenhang ist zudem die Möglichkeit eröffnet, dass die Frontplatte eine Vielzahl von Partikeln und/oder Störstellen aufweist, die derart ausgebildet sind, um auf sie auftreffendes Licht zu streuen. Durch diese Ausgestaltung lässt sich ein diffuses Licht über die Vorderseite der Rückwand auskoppeln, so dass keine Blendeffekte an der Rückwand auftreten, die in der späteren Aufnahme der Kamera sichtbar werden.

Es ist von Vorteil, wenn die Beleuchtungseinrichtung mindestens ein Leuchtelement, insbesondere eine Leuchtdiode, umfasst, das derart an der Frontplatte angeordnet ist, dass ein von ihm abgestrahltes Licht nahezu vollständig oder vollständig in die Frontplatte eingekoppelt wird. Damit ist also ein Teil der Beleuchtungseinrichtung dafür vorgesehen, um die Rückwand selbst aktiv zu beleuchten, womit diese selbststrahlend ausgestaltet ist, um eine schattenfreie Aufnahme des Bildhintergrunds zu gewährleisten.

Um zu gewährleisten, dass auch das zu erfassende Gesicht oder die zu erfassende Person möglichst schattenfrei von der Kamera erfasst werden, hat es sich als vorteilhaft erwiesen, wenn die Beleuchtungseinrichtung mindestens eine Leuchteinheit umfasst, die ausgebildet ist, eine von der Rückwand abgewandte Seite der Person zu beleuchten; mithin die Person also von vorne zu beleuchten.

In vielen Fällen und abhängig vom beabsichtigten Verwendungszweck des zu erfassenden Gesichtsbildes kann es ausreichend sein, dass das Sonnenlicht eine hinreichende Ausleuchtung sowohl des Gesichts als auch der Rückwand gewährleistet, so dass es von Vorteil sein kann, wenn ein Helligkeitssensor, beispielsweise in Form eines Photosensors, vorhanden ist, und wenn die Rückwand in Abhängigkeit der vom Helligkeitssensor erfassten Sensorwerte zwischen der Opak-Konfiguration und der Transmissions-Konfiguration, insbesondere automatisiert, umschaltbar ist.

Für die Aufnahme des Gesichts und/oder der Person kann es in manchen Fällen von Vorteil sein, wenn die Rückwand derart ausgebildet ist, dass auf die Rückseite der Rückwand auftreffendes Licht außerhalb des eines vorgegebenen Spektralbereichs dennoch zur Vorderseite der Rückwand transmittiert wird, und zwar auch dann, wenn sich die Rückwand in der Opak-Konfiguration befindet.

Die im Zusammenhang mit dem Aufnahmesystem erläuterten Vorteile und Ausgestaltungen gelten sinngemäß auch für das erfindungsgemäße Verfahren.

Dieses umfasst insbesondere die folgenden Schritte:
- Positionieren einer Person zwischen einer Kamera und einer einen Bildhintergrund für die Aufnahme bildenden Rückwand, die eine der Kamera zugewandte Vorderseite und eine von der Kamera abgewandte Rückseite aufweist,
- Beleuchten der Rückwand mittels einer Beleuchtungseinrichtung derart, dass die Rückwand frei von durch die Person oder Umgebungsgegenstände erzeugtem Schatten ist,
- Umschalten der Rückwand aus einer Transmission-Konfiguration, in welcher auf die Rückseite der Rückwand auftreffendes Licht zur Vorderseite der Rückwand transmittiert wird, zu einer Opak-Konfiguration, in welcher das auf die Rückseite der Rückwand auftreffende Licht zumindest eines vorgegebenen Spektralbereichs absorbiert oder reflektiert wird, und
- Aufnehmen zumindest des Gesichts der Person mittels der Kamera.

Somit kann also das Aufnahmesystem ebenfalls an Flughäfen und/oder an Grenzkontrollstellen eingesetzt werden, da durch das erfindungsgemäße Verfahren die Möglichkeit eröffnet ist, dass eine Rückwand für die Aufnahme einer abzulichtenden Person, insbesondere bei einer Identitätsprüfung, als Bildhintergrund genutzt werden kann einerseits, und dass eine Rückwand als eine transparente und damit durchsichtige Trennwand genutzt werden kann andererseits, um den sich dahinter befindlichen Bereich einsehen zu können, wie es in Sicherheitszonen oder in Sicherheitsbereichen notwendig ist.

In diesem Zusammenhang ist es deshalb vorteilhaft, wenn die Rückwand nach der Aufnahme des Gesichts und/oder der Person in die Transmission-Konfiguration zurückgeschaltet wird, da dann wieder der sich hinter der Rückwand befindende Bereich vom Sicherheitspersonal einsehbar ist.

Eine sehr einfache Umschaltmöglichkeit zwischen den Konfigurationen wird insbesondere dadurch erzielt, dass die Rückwand mehrschichtig mit einer zwischen einer die Rückseite umfassenden Rückplatte und einer einen Lichtleiter bildenden Frontplatte angeordneten elektrosensitiven Folie gebildet ist, und dass die Rückwand zwischen der Opak-Konfiguration und der Transmission-Konfiguration umgeschaltet wird beim Anlegen oder beim Abnehmen einer elektrischen Spannung an der oder von der Folie.

Zur Erzeugung eines schattenfreien Bildhintergrunds für die Aufnahme hat es sich als vorteilhaft erwiesen, wenn beim Beleuchten der Rückwand mittels der Beleuchtungseinrichtung Licht in die als ein Lichtleiter gebildete Frontplatte eingekoppelt wird und/oder wenn die Rückwand zumindest teilweise in die Transmission-Konfiguration überführt wird, um auf die Rückseite auftreffendes Licht durch die Rückwand zu transmittieren und um die Frontplatte zu beleuchten.

Zur Vermeidung von Schatten in der Aufnahme durch die Kamera hat es sich bevorzugt herausgestellt, wenn die Beleuchtungseinrichtung mindestens eine Leuchteinheit aufweist, die eine von der Rückwand abgewandte Seite der Person beleuchtet; mithin die Person also von vorne beleuchtet.

Weitere Vorteile, Merkmale und Einzelheiten der Erfindung ergeben sich aus den Ansprüchen, der nachfolgenden Beschreibung bevorzugter Ausführungsformen, sowie anhand der Zeichnungen. Dabei zeigen:
- Figur 1: eine perspektivische seitliche Illustration des Aufnahmesystems,
- Figur 2: eine perspektivische frontale Illustration des Aufnahmesystems aus Figur 1,
- Figur 3: eine ausschnittsweise Schnittansicht durch die Rückwand,
- Figur 4: eine ausschnittsweise Schnittansicht durch die Rückwand in der Transmission-Konfiguration,
- Figur 5: eine ausschnittsweise Schnittansicht durch die Rückwand in der Opak-Konfiguration, und
- Figur 6: eine ausschnittsweise Schnittansicht durch eine weitere Rückwand.

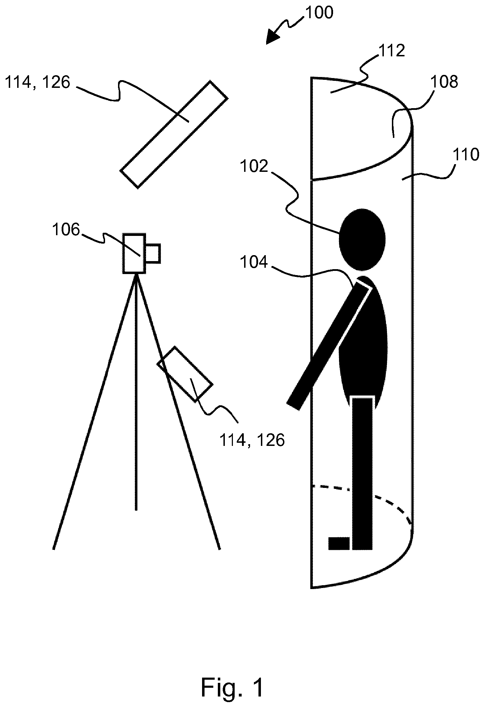

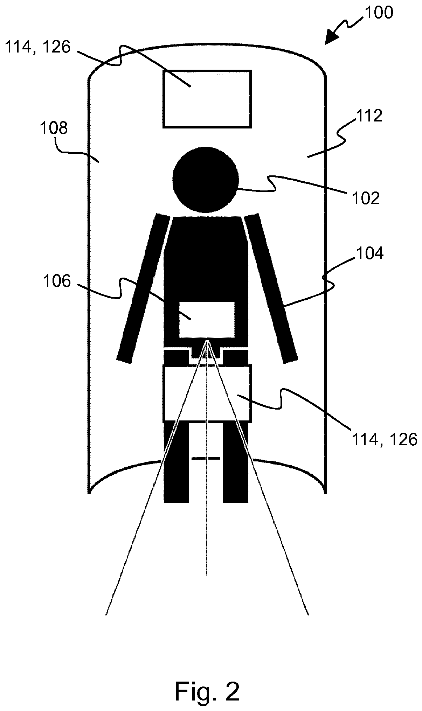

In Figuren 1 und 2 ist ein Aufnahmesystem 100 zur optischen Erfassung zumindest eines Gesichts 102 einer Person 104 gezeigt, welches eine Kamera 106 umfasst, die mit ihrer Optik auf eine einen Bildhintergrund für die Aufnahme bildende Rückwand 112 gerichtet ist. Die Rückwand 112 weist eine der Kamera 106 zugewandte Vorderseite 108 und eine von der Kamera 106 abgewandte Rückseite 110 auf. Zudem ist eine, vorliegend mehrteilige, Beleuchtungseinrichtung 114 vorhanden, die ausgebildet ist, die Rückwand 112 und die Person 104 zu beleuchten. Ein derartiges Aufnahmesystem 100 wird beispielsweise bei Enrolment-Systemen, insbesondere an Grenzkontrollstellen bspw. an Flughäfen oder dergleichen eingesetzt.

Die Rückwand 112 ist vorliegend bezüglich der Kamera 106 konkav gebogen, so dass diese zugleich dazu genutzt werden kann, um von außen einfallendes Licht oder Störungen abzuschotten. Die konkave Formgebung der Rückwand 112 ist vertikal ausgebildet, so dass eine Person in der Biegung der Rückwand 112 stehen kann. Sollte diese Bauform aus Platzgründen nicht möglich sein, kann die Rückwand 110 auch plan und rechteckig geformt sein. Die Vorteile einer Abschottung der Person 104 und eine seitliche Beleuchtung des Gesichts 102 entfallen in diesem Fall. Es ist zu erkennen, dass die Beleuchtungseinrichtung 114 vorliegend zwei Leuchteinheiten 126 umfasst, um die Person 104 von vorne, d.h. von einer von der Rückwand 112 abgewandten Seite der Person 104, zu beleuchten. Hierbei ist eine Leuchteinheit 126 ausgebildet, die Person 104 diagonal von oben zu bestrahlen wobei die andere Leuchteinheit 126 ausgebildet ist, die Person 104 diagonal von unten zu bestrahlen.

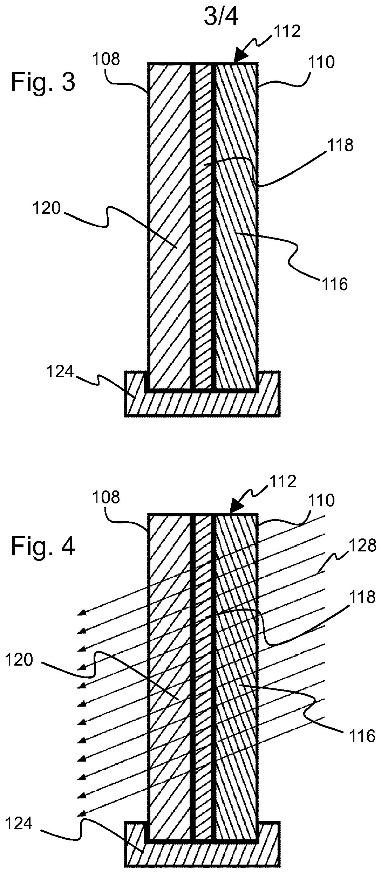

Anhand der Figuren 3 bis 6 sei nachstehend exemplarisch der Aufbau der Rückwand 112 beschrieben. Der Rückwand 112 ist vorliegend ein Rahmen 124 zugeordnet, der mit einem oder mit mehreren Standfüßen ausgebildet sein kann, um die Rückwand 112 frei im Raum aufzustellen. Der Rahmen 124 kann aber auch Aufhängelemente umfassen, um die Rückwand 112 beispielsweise an der Decke des Raumes aufzuhängen. Der Rahmen 124 kann auch derart ausgebildet sein, dass er selbst den Standfuß für die Rückwand 112 bildet. Der Rahmen 124 fixiert den mehrschichtigen Aufbau der Rückwand 112.

Die Rückwand 112 weist vorliegend eine die Rückseite 110 aufweisende Rückplatte 116 auf, die ein transparentes Substrat für eine auf einer der Rückseite 110 abgewandten Seite der Rückplatte 116 angebrachte elektrosensitive Folie 118 bildet. Das transparentes Substrat kann beispielsweise ein Glas oder auch ein Kunststoff sein, wobei unter "transparent" vorliegend "durchsichtig für das menschliche Auge" zu verstehen ist. Die elektrosensitive Folie 118, mithin die elektrisch schaltbare Folie 118, ist als eine Zwischenschicht gebildet, weil auf ihrer der Rückplatte 116 abgewandten Seite eine Frontplatte 120 positioniert ist. Diese Frontplatte 120 umfasst oder bildet die Vorderseite 108 der Rückwand 112. Die Frontplatte 120 weist vorliegend die Besonderheit auf, dass diese als ein Lichtleiter gestaltet ist, derart, dass in die Frontplatte 120 eingekoppeltes Licht über die Vorderseite 108 der Rückwand 112 auskoppelbar ist oder ausgekoppelt wird. Um ein diffuses Licht auf der der Person 104 zugewandten Seite der Rückwand 112 zu erzeugen, ist die Frontplatte 120 mit einer Vielzahl von Partikeln und/oder Störstellen gebildet, die derart ausgebildet sind, um auf sie auftreffendes Licht zu streuen.

Wird die elektrosensitive Folie 118 elektrisch geschaltet, so wird die Rückwand 112 in die Transmission-Konfiguration überführt, in welcher die Rückwand 112 für das menschliche Auge durchsichtig wird. Das Sicherheitspersonal kann also in dieser Konfiguration den sich hinter der Rückwand 112 befindlichen Raum einsehen und überwachen. Die Transmissions-Konfiguration ist in Figur 4 zu erkennen, bei der auf die Rückseite 110 der Rückwand auftreffendes Licht zur Vorderseite 108, der Rückwand 112 transmittiert wird, womit die Rückwand 112 für das Sicherheitspersonal durchsichtig wird.

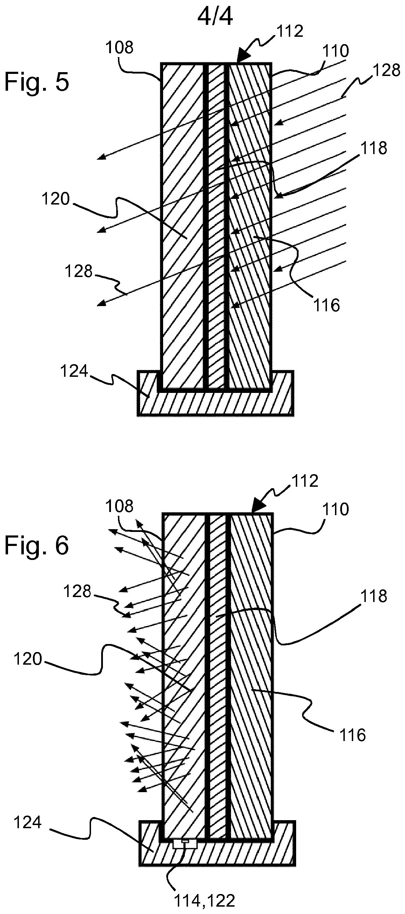

Beim Umschalten der Rückwand 112 in die Opak-Konfiguration wird beispielsweise die Spannung von der elektrisch schaltbaren elektrosensitiven Folie 118 abgenommen, so dass diese undurchsichtig für das menschliche Auge wird (Fig. 5). Allerdings besteht die Möglichkeit, dass in der Opak-Konfiguration Licht außerhalb eines vorgegebenen Spektralbereichs dennoch zur Vorderseite 108 der Rückwand 112 transmittiert wird, wie dies in Figur 5 ebenfalls angedeutet ist, so dass die Rückwand 112 zwar undurchsichtig für das menschliche Auge wird, aber dennoch nicht vollständig abgedunkelt ist. Dies ist in Figur 5 mittels der durch die Rückwand 112 noch hindurchtretenden Lichtstrahlen 128 illustriert.

In der Darstellung von Figur 6 ist zu erkennen, dass die Beleuchtungseinrichtung 114 zudem mindestens ein Leuchtelement 122, vorliegend mindestens eine Leuchtdiode, umfasst, die derart am Rahmen 124 bezüglich der Frontplatte 120 angeordnet ist, dass ein von der Leuchtdiode abstrahlendes Licht im Wesentlichen vollständig in die Frontplatte 120 eingekoppelt wird. Selbstverständlich können mehrere Leuchtelemente 122 vorhanden sein, um eine gleichmäßige Ausleuchtung der Rückwand 112 zu erzielen. Da die Frontplatte 120 als ein Lichtleiter agiert, strahlt diese das Licht über die Vorderseite 108 aus, womit die Person 104 von hinten beleuchtet wird, um eine schattenfreie Ausleuchtung des Bildhintergrunds zu erzeugen. Die elektrosensitive Folie 118 und/oder die Rückplatte 116 können derart gebildet sein, mithin also eine geeignete Brechzahl aufweisen, um als ein Reflektor zu agieren für in dem Lichtleiter, nämlich der Frontplatte 120 geführtes Licht. Somit ist gewährleistet, dass mittels der Leuchtdiode in die Frontplatte 120 eingekoppeltes Licht nur über die Vorderseite 108 der Rückwand 112 ausgekoppelt wird.

Nachfolgend sei erläutert, wie beispielsweise bei einer Grenzkontrolle das Aufnahmesystem 100 eingesetzt wird. Zunächst wird eine Person 104 zwischen der Kamera 106 und der den Bildhintergrund für die Aufnahme bildenden Rückwand 112 positioniert. Dann wird die Person 104 und/oder die Rückwand 112 mittels der Beleuchtungseinrichtung 114 derart beleuchtet, dass das Gesicht 102 und die Rückwand 112 frei von Schatten ist.

Für die Aufnahme wird die Rückwand 112 aus der Transmission-Konfiguration, in welcher auf die Rückseite 110 der Rückwand 112 auftreffendes Licht zur Vorderseite 108 der Rückwand 112 transmittiert wird, zu einer Opak-Konfiguration umgeschaltet, in welcher das auf die Rückseite 110 der Rückwand 112 auftreffende Licht zumindest eines vorgegebenen Spektralbereichs absorbiert oder reflektiert wird.

Anschließend wird zumindest das Gesicht 102 der Person 104 mittels der Kamera 106 erfasst bzw. aufgenommen. Die Rückwand 112 kann dann wieder in die Transmission-Konfiguration zurückgeschaltet werden, womit das Sicherheitspersonal den dahinterliegenden Bereich wieder einsehen kann.

Zusammenfassend liegt also ein Aufnahmesystem 100 vor, das sich insbesondere beim Einsatz an Flughäfen oder an Grenzkontrollstellen eignet, da die Rückwand 112 in der Transmission-Konfiguration durchsichtig gestaltet ist, um Sicherheitsbereiche einsehbar zu machen. Zugleich kann die Rückwand 112 aber in der Opak-Konfiguration als Raumteiler agieren, der bei der Aufnahme eines Gesichtsbilds der Person 104 als neutraler Bildhintergrund dient. In der Opak-Konfiguration kann die Rückwand 112 beliebige Farben aufweisen, vorzugsweise jedoch weiß oder grau eingefärbt sein.

### BEZUGSZEICHENLISTE

- 100: Aufnahmesystem
- 102: Gesicht
- 104: Person
- 106: Kamera
- 108: Vorderseite
- 110: Rückseite
- 112: Rückwand
- 114: Beleuchtungseinrichtung
- 116: Rückplatte (Rückscheibe)
- 118: Folie
- 120: Frontplatte (Frontscheibe)
- 122: Leuchtelement
- 124: Rahmen
- 126: Leuchteinheit
- 128: Lichtstrahlen

## Patentansprüche

1. Aufnahmesystem (100) zur optischen Erfassung zumindest eines Gesichts (102) einer Person (104), mit einer Kamera (106), die mit ihrer Optik auf eine einen Bildhintergrund für die Aufnahme bildende Rückwand (112) gerichtet ist, welche eine der Kamera (106) zugewandte Vorderseite (108) und eine von der Kamera (106) abgewandte Rückseite (110) aufweist,
sowie mit einer Beleuchtungseinrichtung (114), die ausgebildet ist, die Rückwand (112) und/oder die Person (104) zu beleuchten,
**dadurch gekennzeichnet, dass**
die Rückwand (112) ausgebildet ist, umgeschaltet zu werden zwischen einer Opak-Konfiguration, in welcher ein zumindest aus einem vorgegebenen Spektralbereich stammendes, auf die Rückseite (110) der Rückwand (112) auftreffendes Licht absorbiert oder von der Rückseite (110) reflektiert wird,
und einer Transmissions-Konfiguration, in welcher auf die Rückseite (110) der Rückwand (112) auftreffendes Licht zur Vorderseite (108) der Rückwand (112) transmittiert wird.

2. Aufnahmesystem (100) nach Anspruch 1, **dadurch gekennzeichnet, dass** die Rückwand (112) mit einer die Rückseite (110) aufweisenden Rückplatte (116) gebildet ist, die ein transparentes Substrat für eine auf einer der Rückseite (110) abgewandten Seite der Rückplatte (116) angebrachte elektrosensitive Folie (118) bildet, um die Rückwand (112) zwischen der Opak-Konfiguration und der Transmissions-Konfiguration elektrisch umzuschalten.

3. Aufnahmesystem (100) nach Anspruch 2, **dadurch gekennzeichnet, dass** die elektrosensitive Folie (118) aus einem Kunststoff gebildet ist, in welchen eine Vielzahl von über die Folie verteilter Flüssigkristalle einlamiert ist, die ausgestaltet sind, ihre Ausrichtung beim Anlegen einer elektrischen Spannung zu verändern.

4. Aufnahmesystem (100) nach einem der Ansprüche 1 bis 3, **dadurch gekennzeichnet, dass** die Rückwand (112) mehrschichtig mit einem Polymer-Flüssigkristallfilm mit Flüssigkristallmolekülen gebildet ist, und dass die im Flüssigkristallfilm angeordneten Flüssigkristallmoleküle ausgestaltet sind, beim Anlegen einer Gleichspannung ihre Ausrichtung zu ändern, um die Rückwand (112) zwischen der Opak-Konfiguration und der Transmissions-Konfiguration elektrisch umzuschalten.

5. Aufnahmesystem (100) nach einem der Ansprüche 1 bis 4, **dadurch gekennzeichnet, dass** die Rückwand (112) eine die Vorderseite (108) der Rückwand (112) aufweisende Frontplatte (120) umfasst, die als ein Lichtleiter gebildet ist, derart, dass in die Frontplatte (120) eingekoppeltes Licht über die Vorderseite (108) der Rückwand (112) auskoppelbar ist oder ausgekoppelt wird.

6. Aufnahmesystem (100) nach Anspruch 5, **dadurch gekennzeichnet, dass** das Material der Frontplatte (120) eine Vielzahl von Partikeln und/oder Störstellen aufweist, die derart ausgebildet sind, um auf sie auftreffendes Licht zu streuen.

7. Aufnahmesystem (100) nach Anspruch 5 oder 6, **dadurch gekennzeichnet, dass** die Beleuchtungseinrichtung (114) mindestens ein Leuchtelement (122) umfasst, das derart an der Frontplatte (120) angeordnet ist, dass ein von ihm abgestrahltes Licht in die Frontplatte (120) eingekoppelt wird.

8. Aufnahmesystem (100) nach einem der Ansprüche 1 bis 7, **dadurch gekennzeichnet, dass** die Beleuchtungseinrichtung (114) mindestens eine Leuchteinheit (126) umfasst, die ausgebildet ist, eine von der Rückwand (122) abgewandte Seite der Person (104) zu beleuchten.

9. Aufnahmesystem (100) nach einem der Ansprüche 1 bis 8, **dadurch gekennzeichnet, dass** ein Helligkeitssensor vorhanden ist, und dass die Rückwand (112) in Abhängigkeit der vom Helligkeitssensor erfassten Sensorwerte zwischen der Opak-Konfiguration und der Transmissions-Konfiguration umschaltbar ist.

10. Aufnahmesystem (100) nach einem der Ansprüche 1 bis 9, **dadurch gekennzeichnet, dass** die Rückwand (112) derart ausgebildet ist, dass auf die Rückseite (110) der Rückwand (112) auftreffendes Licht außerhalb des vorgegebenen Spektralbereichs zur Vorderseite (108) der Rückwand (112) auch in der Opak-Konfiguration transmittiert wird.

11. Verfahren zur optischen Erfassung zumindest eines Gesichts (102) einer Person (104) mit einem Aufnahmesystem (100) nach einem der Ansprüche 1 bis 10, **gekennzeichnet durch** die Schritte:
- Positionieren einer Person (104) zwischen einer Kamera (106) und einer einen Bildhintergrund für die Aufnahme bildenden Rückwand (112), die eine der Kamera (106) zugewandte Vorderseite (108) und eine von der Kamera (106) abgewandte Rückseite (110) aufweist,
- Beleuchten der Person (104) und/oder der Rückwand (112) mittels einer Beleuchtungseinrichtung (114) derart, dass die Rückwand (112) frei von durch die Person (104) oder durch Umgebungsgegenstände erzeugtem Schatten ist,
- Umschalten der Rückwand (112) aus einer Transmissions-Konfiguration, in welcher auf die Rückseite (110) der Rückwand (112) auftreffendes Licht zur Vorderseite (108) der Rückwand (112) transmittiert wird, zu einer Opak-Konfiguration, in welcher das auf die Rückseite (110) der Rückwand (112) auftreffende Licht zumindest eines vorgegebenen Spektralbereichs absorbiert oder reflektiert wird, und
- Aufnehmen zumindest des Gesichts (102) der Person (104) mittels der Kamera (106).

12. Verfahren nach Anspruch 11, **dadurch gekennzeichnet, dass** die Rückwand (112) nach der Aufnahme des Gesichts (102) und/oder der Person (104) in die Transmissions-Konfiguration zurückgeschaltet wird.

13. Verfahren nach Anspruch 11 oder 12, **dadurch gekennzeichnet, dass** die Rückwand (112) mehrschichtig mit einer zwischen einer die Rückseite (110) umfassenden Rückplatte (116) und einer einen Lichtleiter bildenden Frontplatte (120) angeordneten elektrosensitiven Folie (118) gebildet ist, und dass die Rückwand (112) zwischen der Opak-Konfiguration und der Transmissions-Konfiguration umgeschaltet wird beim Anlegen oder beim Abnehmen einer elektrischen Spannung an der oder von der Folie (118).

14. Verfahren nach Anspruch 13, **dadurch gekennzeichnet, dass** beim Beleuchten der Rückwand (112) mittels der Beleuchtungseinrichtung (114) Licht in die als ein Lichtleiter gebildete Frontplatte (120) eingekoppelt wird und/oder dass die Rückwand (112) zumindest teilweise in die Transmissions-Konfiguration überführt wird, um auf die Rückseite (110) auftreffendes Licht durch die Rückwand (112) zu transmittieren, wodurch die Frontplatte (120) beleuchtet wird.

15. Verfahren nach einem der Ansprüche 11 bis 14, **dadurch gekennzeichnet, dass** die Beleuchtungseinrichtung (114) mindestens eine Leuchteinheit (126) aufweist, die eine von der Rückwand (112) abgewandte Seite der Person (104) beleuchtet.

## Claims

1. Recording system (100) for optically detecting at least one face (102) of a person (104), having a camera (106) which is directed with its optics onto a back wall (112) which forms an image background for the recording and which has a front side (108) facing the camera (106) and a back side (110) facing away from the camera (106),
and with an illumination device (114) which is designed to illuminate the back wall (112) and/or the person (104),
**characterized in that**
the back wall (112) is adapted to be switched between an opaque configuration, in which light originating at least from a predetermined spectral range and impinging on the back side (110) of the back wall (112) is absorbed or reflected by the back side (110)
and a transmission configuration, in which light incident on the back side (110) of the back wall (112) is transmitted to the front side (108) of the back wall (112).

2. Recording system (100) according to claim 1, **characterized in that** the back wall (112) is formed with a back plate (116) comprising the back side (110) forming a transparent substrate for an electrosensitive film (118) mounted on a side of the back plate (116) opposite to the back side (110) to electrically switch the back wall (112) between the opaque configuration and the transmission configuration.

3. Recording system (100) according to claim 2, **characterized in that** the electrosensitive film (118) is formed of a plastic in which a plurality of liquid crystals distributed over the film are laminated, the liquid crystals being configured to change their orientation upon application of an electrical voltage.

4. Recording system (100) according to any one of claims 1 to 3, **characterized in that** the back wall (112) is formed in multiple layers with a polymer liquid crystal film comprising liquid crystal molecules, and **in that** the liquid crystal molecules arranged in the liquid crystal film are configured to change their orientation upon application of a DC voltage to electrically switch the back wall (112) between the opaque configuration and the transmission configuration.

5. Recording system (100) according to any one of claims 1 to 4, **characterized in that** the back wall (112) comprises a front plate (120) having the front side (108) of the back wall (112), which the front plate (120) is formed as a light guide such that light coupled into the front plate (120) can be coupled out or is coupled out via the front side (108) of the back wall (112).

6. Recording system (100) according to claim 5, **characterized in that** the material of the front plate (120) comprises a plurality of particles and/or imperfections configured to scatter light incident thereon.

7. Recording system (100) according to claim 5 or 6, **characterized in that** the illumination device (114) comprises at least one lighting element (122) arranged on the front plate (120) such that a light emitted therefrom is coupled into the front plate (120).

8. Recording system (100) according to any one of claims 1 to 7, **characterized in that** the illumination device (114) comprises at least one lighting unit (126) configured to illuminate a side of the person (104) facing away from the back wall (122).

9. Recording system (100) according to any one of claims 1 to 8, **characterized in that** a brightness sensor is present, and **in that** the back wall (112) can be switched between the opaque configuration and the transmission configuration as a function of the sensor values detected by the brightness sensor.

10. Recording system (100) according to any one of claims 1 to 9, **characterized in that** the back wall (112) is configured such that light incident on the back side (110) of the back wall (112) outside the predetermined spectral range is transmitted to the front side (108) of the back wall (112) even in the opaque configuration.

11. Method for optically detecting at least one face (102) of a person (104) with a recording system (100) according to any one of claims 1 to 10, **characterized by** the steps of:
- Positioning a person (104) between a camera (106) and a back wall (112) forming an image background for the capture, the back wall (112) having a front side (108) facing the camera (106) and a back side (110) facing away from the camera (106),
- illuminating the person (104) and/or the back wall (112) by means of an illumination device (114) in such a way that the back wall (112) is free of shadow produced by the person (104) or by surrounding objects,
- switching the back wall (112) from a transmission configuration, in which light incident on the back side (110) of the back wall (112) is transmitted to the front side (108) of the back wall (112), to an opaque configuration, in which the light incident on the back side (110) of the back wall (112) is absorbed or reflected at least in a predetermined spectral range, and
- capturing at least the face (102) of the person (104) by means of the camera (106).

12. Method according to claim 11, **characterized in that** the back wall (112) is switched back to the transmission configuration after the face (102) and/or the person (104) has been captured.

13. Method of claim 11 or 12, **characterized in that** the back wall (112) is formed in multiple layers with an electrosensitive film (118) disposed between a back plate (116) comprising the back side (110) and a front plate (120) forming a light guide, and **in that** the back wall (112) is switched between the opaque configuration and the transmission configuration upon application or removal of an electrical voltage to or from the film (118).

14. Method according to claim 13, **characterized in that** when illuminating the back wall (112) by means of the illumination device (114), light is coupled into the front plate (120) formed as a light guide and/or that the back wall (112) is at least partially transferred into the transmission configuration in order to transmit light impinging on the back side (110) through the back wall (112), thereby illuminating the front plate (120).

15. Method according to any one of claims 11 to 14, **characterized in that** the illumination device (114) comprises at least one lighting unit (126) that illuminates a side of the person (104) facing away from the back wall (112).

## Revendications

1. Système d'enregistrement (100) pour la détection optique au moins d'un visage (102) d'une personne (104), avec une caméra (106) qui est dirigée avec son optique sur une paroi arrière (112) formant un arrière-plan d'image pour l'enregistrement, qui présente un côté avant (108) tourné vers la caméra (106) et un côté arrière (110) éloigné de la caméra (106),
ainsi qu'avec un dispositif d'éclairage (114) qui est réalisé afin d'éclairer la paroi arrière (112) et/ou la personne (104),
**caractérisé en ce que**
la paroi arrière (112) est réalisée afin d'être commutée entre une configuration opaque, dans laquelle une lumière provenant au moins d'une plage spectrale prescrite, rencontrant le côté arrière (110) de la paroi arrière (112) est absorbée ou est réfléchie par le côté arrière (110), et une configuration de transmission, dans laquelle de la lumière rencontrant le côté arrière (110) de la paroi arrière (112) est transmise au côté avant (108) de la paroi arrière (112).

2. Système d'enregistrement (100) selon la revendication 1, **caractérisé en ce que** la paroi arrière (112) est formée avec une plaque arrière (116) présentant le côté arrière (110) qui forme un substrat transparent pour un film (118) électrosensible monté sur un côté éloigné du côté arrière (110) de la plaque arrière (116) afin de commuter électriquement la paroi arrière (112) entre la configuration opaque et la configuration de transmission.

3. Système d'enregistrement (100) selon la revendication 2, **caractérisé en ce que** le film électrosensible (118) est formé en une matière plastique, en laquelle une pluralité de cristaux liquides répartis sur le film est laminée, lesquels sont configurés afin de modifier leur orientation lors de l'application d'une tension électrique.

4. Système d'enregistrement (100) selon l'une quelconque des revendications 1 à 3, **caractérisé en ce que** la paroi arrière (112) est formée à plusieurs couches avec un film à cristaux liquides en polymère avec des molécules de cristaux liquides, et que les molécules de cristaux liquides agencées dans le film à cristaux liquides sont configurées afin de modifier, lors de l'application d'une tension de courant continu, leur orientation pour commuter électriquement la paroi arrière (112) entre la configuration opaque et la configuration de transmission.

5. Système d'enregistrement (100) selon l'une quelconque des revendications 1 à 4, **caractérisé en ce que** la paroi arrière (112) comporte une plaque avant (120) présentant le côté avant (108) de la paroi arrière (112) qui est formée comme un conducteur lumineux de telle manière que de la lumière injectée dans la plaque avant (120) est ou puisse être sortie par le biais du côté avant (108) de la paroi arrière (112).

6. Système d'enregistrement (100) selon la revendication 5, **caractérisé en ce que** le matériau de la plaque avant (120) présente une pluralité de particules et/ou de défauts qui sont réalisés de manière à diffuser de la lumière la rencontrant.

7. Système d'enregistrement (100) selon la revendication 5 ou 6, **caractérisé en ce que** le dispositif d'éclairage (114) comporte au moins un élément lumineux (122) qui est agencé au niveau de la plaque avant (120) de telle manière qu'une lumière émise par celui-ci soit injectée dans la plaque avant (120).

8. Système d'enregistrement (100) selon l'une quelconque des revendications 1 à 7, **caractérisé en ce que** le dispositif d'éclairage (114) comporte au moins une unité lumineuse (126) qui est réalisée afin d'éclairer un côté éloigné de la paroi arrière (122) de la personne (104).

9. Système d'enregistrement (100) selon l'une quelconque des revendications 1 à 8, **caractérisé en ce qu'**un capteur de luminosité est présent, et **en ce que** la paroi arrière (112) peut être commutée, en fonction des valeurs de capteur détectées par le capteur de luminosité, entre la configuration opaque et la configuration de transmission.

10. Système d'enregistrement (100) selon l'une quelconque des revendications 1 à 9, **caractérisé en ce que** la paroi arrière (112) est réalisée de telle manière que de la lumière rencontrant le côté arrière (110) de la paroi arrière (112) soit transmise en dehors de la plage spectrale prédéfinie au côté avant (108) de la paroi arrière (112) aussi dans la configuration opaque.

11. Procédé de détection optique au moins d'un visage (102) d'une personne (104) avec un système d'enregistrement (100) selon l'une quelconque des revendications 1 à 10, **caractérisé par** les étapes :
- le positionnement d'une personne (104) entre une caméra (106) et une paroi arrière (112) formant un arrière-plan d'image pour l'enregistrement qui présente un côté avant (108) tourné vers la caméra (106) et un côté arrière (110) éloigné de la caméra (106),
- l'éclairage de la personne (104) et/ou de la paroi arrière (112) au moyen d'un dispositif d'éclairage (114) de telle manière que la paroi arrière (112) soit exempte d'ombre générée par la personne (104) ou par des objets ambiants,
- la commutation de la paroi arrière (112) d'une configuration de transmission, dans laquelle de la lumière rencontrant le côté arrière (110) de la paroi arrière (112) est transmise au côté avant (108) de la paroi arrière (112), à une configuration opaque, dans laquelle la lumière rencontrant le côté arrière (110) de la paroi arrière (112) au moins d'une plage spectrale prédéfinie est absorbée ou réfléchie, et
- l'enregistrement au moins du visage (102) de la personne (104) au moyen de la caméra (106).

12. Procédé selon la revendication 11, **caractérisé en ce que** la paroi arrière (112) est recommutée après l'enregistrement du visage (102) et/ou de la personne (104) dans la configuration de transmission.

13. Procédé selon la revendication 11 ou 12, **caractérisé en ce que** la paroi arrière (112) est formée à plusieurs couches avec un film (118) électrosensible agencé entre une plaque arrière (116) comportant le côté arrière (110) et une plaque avant (120) formant un conducteur lumineux, et **en ce que** la paroi arrière (112) est commutée entre la configuration opaque et la configuration de transmission lors de l'application ou lors de la diminution d'une tension électrique au niveau du ou du film (118).

14. Procédé selon la revendication 13, **caractérisé en ce que**, lors de l'éclairage de la paroi arrière (112) au moyen du dispositif d'éclairage (114), de la lumière est injectée dans la plaque avant (120) formée comme un conducteur lumineux et/ou **en ce que** la paroi arrière (112) est transférée au moins partiellement dans la configuration de transmission afin de transmettre de la lumière rencontrant le côté arrière (110) par la paroi arrière (112), par quoi la plaque avant (120) est éclairée.

15. Procédé selon l'une quelconque des revendications 11 à 14, **caractérisé en ce que** le dispositif d'éclairage (114) présente au moins une unité lumineuse (126) qui éclaire un côté éloigné de la paroi arrière (112) de la personne (104).
